# EUROPÄISCHE PATENTSCHRIFT

(11) **EP 4 395 691 B1**
(45) Veröffentlichungstag und Bekanntmachung des Hinweises auf die Patenterteilung: **02.07.2025**
(21) Anmeldenummer: 22769701.8
(22) Anmeldetag: 30.08.2022
(51) Int. Cl.: A61C 8/00

(54) **ZAHNIMPLANTAT-ANORDNUNG**
DENTAL IMPLANT ASSEMBLY
AGENCEMENT D'IMPLANT DENTAIRE

(30) Priorität: 03.09.2021 EP 21194850; 05.10.2021 EP 21200917
(43) Veröffentlichungstag der Anmeldung: 10.07.2024
(73) Patentinhaber: CeramTec GmbH, 73207 Plochingen (DE)
(72) Erfinder: JUSZCZYK, Mateusz Maria, 91235 Velden (DE); REMPP, Andreas, 73207 Plochingen (DE)
(74) Vertreter: Maikowski & Ninnemann Patentanwälte Partnerschaft mbB
(86) Internationale Anmeldenummer: PCT/EP2022/074075
(87) Internationale Veröffentlichungsnummer: WO 2023/031195

(56) Entgegenhaltungen:
- EP-A1- 3 143 961
- DE-U1- 20 209 170
- DE-U1- 202006 013 267
- US-A1- 2006 216 672

## Beschreibung

Die vorliegende Erfindung betrifft das Gebiet der Zahnheilkunde und beschreibt eine Zahnimplantat-Anordnung, die in den Kieferknochen eines Patienten eingesetzt wird. Die erfindungsgemäße Zahnimplantat-Anordnung dient der Aufnahme einer Krone, einer Zahnprothese. Die Zahnimplantat-Anordnung umfasst einen Grundkörper, der die Zahnimplantat-Anordnung mit dem Alveolarknochen (d. h. dem Kieferknochen) verbindet, ein Abutment und ein Verbindungselement. Das Abutment dient als zweiseitiger Adapter, der die Zahnprothese, die Krone, mit der Zahnimplantat-Anordnung verbindet. Mittels dem Verbindungselement wird das Abutment auf dem Grundkörper befestigt.

Aus dem Stand der Technik sind ein- oder zweiteilige Zahnimplantate bekannt. Diese erstrecken sich entlang einer ersten Längsachse zwischen einem apikalen und einem koronalen Ende, und der apikale, enossaler Teil des Zahnimplantats, der Grundkörper ist dazu bestimmt, in den Kieferknochen des Patienten eingebettet zu werden.

Die dentale Implantologie umfasst die Wiederherstellung eines oder mehrerer Zähne im Mund eines Patienten mit Hilfe künstlicher Komponenten. Diese künstlichen Komponenten bestehen in der Regel aus einem Zahnimplantat und einer prothetischen Zahnkrone, die fest mit dem Zahnimplantat verbunden ist. Das Zahnimplantat kann als einteiliges Element mit einem integrierten Verbindungsstück zur Zahnkrone ausgebildet sein. In den letzten Jahren haben sich zweiteilige Zahnimplantatsysteme etabliert. Ein zweiteiliges Zahnimplantat besteht in der Regel aus einem Grundkörper, der im Knochen verankert wird, und einem Abutment, welches als Verbindungsstück zwischen der künstlichen Zahnkrone und dem Grundkörper des Zahnimplantats fungiert. Der Grundkörper wird in der Regel implantiert, indem ein Weichgewebelappen angehoben und der Alveolarknochen angebohrt wird, um das Bett des Zahnimplantats vorzubereiten. Dann wird der Grundkörpers eingesetzt, eine Kappe zur Unterstützung des Heilprozesses der Wunde angebracht und anschließend die Wunde angemessen verschlossen. Nach dem Heilprozess wird die Kappe entfernt und das Abutment mit dem Grundkörper verschraubt und/oder mit einem geeigneten Befestigungsmittel zementiert. Anschließend kann der prothetische Zahn, die künstliche Zahnkrone aufgesetzt werden.

Es sind Zahnimplantate bekannt, die vollständig in den Knochen eingebettet werden und bündig mit dem Knochenniveau abschließen (juxta-ossäre Platzierung) oder sogar etwas unterhalb des Knochenniveaus liegen. Diese Zahnimplantate werden als "Bone-Level"-Implantate bezeichnet. Für diese Implantate ist in der Regel ein zweigeteiltes chirurgisches Verfahren erforderlich. Ein Implantat, dessen Schulter einige Millimeter über das Knochenniveau hinausragt und somit zur Ausformung des umliegenden Gewebes beiträgt, wird als "Tissue-Level"-Implantat bezeichnet.

Das "Tissue-Level"-Implantat hat einen verlängerten apikalen Teil, einen Kragen, der mit dem gingivalen (weichen) Gewebe in Kontakt steht. Diese "Tissue-Level"-Implantate erlauben es, das Zahnimplantat in einen einzigen chirurgischen Eingriff einzusetzen und werden daher meist für die posterioren Implantatstellen verwendet.

In den meisten Zahnimplantaten werden die Flächen des Grundkörpers und des Abutments, die im implantierten Zustand aufeinandertreffen, so aufeinander abgestimmt, dass sie ineinandergreifend zusammenpassen und sich nicht gegeneinander verdrehen lassen, wie z. B. Stecker und Steckdose. Um einen festen Sitz der Zahnkrone zu gewährleisten, muss eine exakt positionierte, sich nicht verdrehende Verbindung zwischen den beiden Teilen sichergestellt werden. Das Abutment weist häufig eine Ausnehmung, eine Senkbohrung, entlang der Längsachse des Abutments auf. Diese Ausnehmung dient zur Aufnahme eines Verbindungsmittels.

In der Regel werden für die Herstellung von Zahnimplantaten Titanlegierungen verwendet, da diese Metalle leicht mit der erforderlichen hohen Präzision verarbeitet werden können, die für die sehr geringen Abmessungen der Zahnimplantate erforderlich ist. Außerdem bieten Titanlegierungen aufgrund ihrer plastischen Nachgiebigkeit eine gute mechanische Stabilität und Dichtheit der Verbindung, da sie mögliche lokale Spannungskonzentrationen verzeihen.

Die Verwendung von Titanlegierungen als Material für Zahnimplantate bringt aber auch Nachteile mit sich. Zum einen der ästhetische Aspekt der grauen Farbe, die gegebenenfalls am Zahnfleischrand sichtbar ist. Zum anderen wird die Freisetzung von Metallionen und in deren Folge allergische Reaktionen des Patienten, in der dentalen Implantologie immer mehr zu einem Problem. Diese Nachteile sowie die aktuellen Fortschritte bei den keramischen Werkstoffen haben in jüngster Zeit zu einer Weiterentwicklung der keramischen Zahnimplantate geführt.

Es wurde eine Vielzahl von zweiteiligen, keramischen Implantaten aus einem Grundkörper und einem Abutment vorgeschlagen. Einige davon, wie in DE 21 2013 000 248 U1 beschrieben, verwenden zwischen dem Grundkörper und dem Abutment eine Kegelverbindung und eine Schraube, allerdings in Kombination mit einem Polymerzement an der Schnittstelle. Dadurch wird ein direkter Keramik-auf-Keramik-Kontakt zwischen den zueinander passenden Teilen verhindert. In der WO 2018/046 148 A1 hingegen wird eine Keramik-Keramik-Verbindung in Kombination mit einer Kunststoffschraube vorgeschlagen. Auch in US 2006/216672 A1, DE 202 09 170 U1, DE 20 2006 013 267 U1 sowie EP 3 143 961 A1 werden zweiteilige Implantate bestehend aus einem implantierbaren Grundkörper und einem nachträglich einsetzbaren Abutment vorgeschlagen.

Es gibt im Stand der Technik Bedenken in Bezug auf zweiteilige Zahnimplantate, bei denen ein keramischer Grundkörper mit einem keramischen Abutment in Berührung steht. Unter Belastung, z.B. beim Kauen, können sich Schnittstellen zwischen Grundkörper und Abutment verändern, beispielsweise öffnen oder es kann ein Spalt entstehen. Diese Veränderungen können möglicherweise zu einer Erhöhung der Punktlast über das akzeptable Belastungsniveau hinaus führt und damit möglicherweise Mikrorisse und/oder ein Versagen des Zahnimplantats verursacht. Die Schnittstelle zwischen Grundkörper und Abutment stellt nach wie vor eine mechanische Herausforderung für eine Keramik-auf-Keramik-Lösung dar. Einige davon sind: Einschränkungen bei den Abmessungen für die Aufnahme notwendiger Merkmale wie Gewinde, Verriegelung oder Rotationssicherung, geringere mechanische Stabilität.

In Anbetracht des Standes der Technik bestand die Aufgabe der vorliegenden Erfindung darin, ein verbessertes zweiteiliges Zahnimplantat zur Verfügung zu stellen, dass eine sichere, positionsgetreue Schnittstelle umfasst und einfach in der Anwendung ist.

Die Aufgabe wird gelöst durch eine Zahnimplantat-Anordnung gemäß Anspruch 1, sowie ein Dentalkit gemäß Anspruch 14. Die Unteransprüche geben bevorzugte Ausgestaltungen wieder. Ausgestaltungen können frei miteinander kombiniert werden. Die erfindungsgemäße Zahnimplantat-Anordnung umfasst einen Grundkörper und ein Abutment mit einer zum Grundkörper passenden Schnittstelle sowie ein Verbindungsmittel, welches Grundkörper und Abutment miteinander in formschlüssiger Verbindung hält. Der Grundkörper bildet die künstliche Zahnwurzel. Er wird in den Alveolarknochen implantiert. Der Grundkörper umfasst einen Schaftabschnitt, der sich am apikalen Ende des Grundkörpers befindet, d. h. das Ende, das in den Alveolarknochen eingeführt wird, einen Kupplungsabschnitt am koronalen Ende des Grundkörpers und eine Ausnehmung, die sich im Inneren des Grundkörpers vom Kopplungsabschnitt in Richtung des Schaftabschnitts erstreckt.

Das Abutment ist im implantierten Zustand an seinem oberen, koronalen Teil mit einer Prothese, der künstlichen Krone oder dem Zahnersatz verbunden und sitzt mit seinem unteren, apikalen Teil auf dem koronalen Ende des Grundkörpers.

In einer Ausgestaltung weist das Abutment selbst das Verbindungselement auf (im Folgenden als internes Verbindungselement bezeichnet), d.h. das Abutment ist im apikalen Bereich derart verlängert, dass es in die Ausnehmung des Grundkörpers reicht und dort das Abutment zusätzlich verankert wird.

In einer bevorzugten Ausgestaltung ist das Verbindungselement nicht am Abutment befestigt. Das Abutment weist eine Öffnung auf, die sich durch das Abutment von seinem oberen, koronalen zu seinem unteren, apikalen Teil erstreckt. Durch diese Öffnung wird ein externes Verbindungselement eingebracht, welches das Abutment auf dem Grundkörper befestigt. Das externe Verbindungselement wird durch die Öffnung des Abutments in die Ausnehmung des Grundkörpers eingeführt.

Der untere, apikale Teil, der Koppelbereich des Abutments und das koronale Ende des Grundkörpers, der Koppelbereich des Grundkörpers, weisen eine zusammenpassende formschlüssige Schnittstelle auf. Der Koppelbereich des Abutment weist eine Geometrieform auf, die der Geometrieform des Koppelbereichs des Kupplungsabschnitts entgegengesetzt ist. In bestimmten Bereichen der Schnittstelle ist die Geometrie im Koppelbereich des Abutments kongruent zu der Geometrie im Koppelbereich des Grundkörpers ausgebildet. Der Koppelbereich des Abutments ist dazu bestimmt, vom Koppelbereich des Grundkörpers aufgenommen zu werden. Im montierten Zustand ist der Koppelbereich des unteren Teils des Abutments mit dem Koppelbereich des Kupplungsabschnitts des Grundkörpers verbunden und bildet eine Kontaktlinie.

In einer Ausgestaltung der Erfindung ist die Zahnimplantat-Anordnung ein "Tissue-Level"-Implantat, so dass die Außenfläche des Grundkörpers nur teilweise in den Alveolarknochen implantiert ist und der Kupplungsbereich des Implantats zumindest teilweise über das Knochenniveau hinausragt. In einer weiteren Ausgestaltung ist das Implantat als "Bone-Level"-Implantat zur vollständigen Einbettung in den Knochen vorgesehen, weshalb die Außenfläche des Grundkörpers vollständig in den Alveolarknochen implantiert ist.

In einer Ausgestaltung ist der Grundkörper 5 - 30 mm in Richtung der Längsachse lang, wobei die Länge die maximale Ausdehnung in Richtung der Längsachse ist. Bevorzugt ist der Grundkörper 7 - 25 mm, besonders bevorzugt 10 - 20 mm lang. Sogenannte kurze Grundkörper sind 5 - 10 mm lang und lange Grundkörper über 25 mm.

Der Nenndurchmessers des Grundkörpers ist definiert als der maximale Durchschnitt des Kupplungsabschnitts des Grundkörpers. Dieser befindet sich bevorzugt auf Höhe des Knochens/der Gingiva. Der Nenndurchmesser des Grundkörpers befindet sich besonders bevorzugt direkt unterhalb des Koppelbereichs. Der Nenndurchmesser liegt bevorzugt in einem Bereich von bis zu 8 mm, bevorzugt bis zu 6 mm und besonders bevorzugt bis zu 5 mm. Der Nenndurchmesser ist weiterhin bevorzugt größer als 1mm besonders bevorzugt größer als 2 mm. Je nach Form, zylindrisch, elliptisch, etc., des Kupplungsabschnitts kann der Durchmesser gleichmäßig konstant sein oder über den Umfang des Kupplungsabschnitts variieren. Bevorzugt liegt der Mittelpunkt des Nenndurchmessers auf der Längsachse. Die äußere Gestaltung des Grundkörpers kombiniert bevorzugt konische, zylindrische und/oder mit Gewinden versehene Abschnitte. Bevorzugt ist das koronale Ende des Grundkörpers konisch oder zylindrisch geformt. Weiterhin bevorzugt ist das apikale Ende des Grundkörpers konisch geformt und trägt bevorzugt mindestens einen Gewindeabschnitt und/ oder eine zumindest teilweise poröse Außenfläche.

In einer Ausgestaltung ist das Abutment in Richtung der Längsachse 3 - 10 mm, bevorzugt 5 - 9, besonders bevorzugt 4 - 8 mm lang.

Um eine anatomische Wiederherstellung der Zähne zu ermöglichen, kann das Abutment eine Form aufweisen, die von einer zylindrischen Längsform abweicht. Das Abutment kann bezogen auf seine Längsachse einen winkelig angeordneten Bereich aufweisen.

Der Durchmesser des Abutments variiert bevorzugt entlang der Längsachse des Implantats. Bevorzugt liegt der maximale Durchmesser des Abutments in einem Bereich von bis zu 8 mm, besonders bevorzugt bis zu 6 mm und insbesondere bevorzugt bis zu 5 mm. Der maximale Durchmesser des Abutments ist in einer bevorzugten Ausgestaltung größer als 1 mm, in einer besonders bevorzugten Ausgestaltung größer als 2mm. Die äußere Form des Abutments ist bevorzugt konisch oder zylindrisch oder zumindest teilweise konisch oder zylindrisch.

Der maximale Durchmesser des Abutments befindet sich in einer bevorzugten Ausgestaltung direkt oberhalb des Koppelbereichs des Abutments am apikalen Ende des Abutments

Der Durchmesser des apikalen Teils des Abutments kann dem Durchmesser des koronalen Teils des Grundkörpers entsprechen, er kann aber auch größer oder kleiner sein. In einer Ausgestaltung entspricht der Durchmesser des apikalen Teils des Abutments dem Durchmesser des koronalen Teils des Grundkörpers oder ist geringfügig größer oder kleiner, wobei der Unterschied zwischen den beiden Durchmessern ≤ 10 %, bevorzugt ≤ 5 %, noch bevorzugter ≤ 1 % ist, so dass Grundkörper und Abutment im Bereich der Schnittstelle im montierten Zustand einen möglichst glatten Übergang der Außenfläche ohne abrupte Durchmesseränderungen aufweisen. Der maximale Durchmesser des apikalen Bereichs des Abutments, der mit dem Grundkörper zu verbindende Geometrie, hat bevorzugt die gleiche äußere Form, z.B. zylindrisch, wie der Kupplungsabschnitt des Grundkörpers, um eine glatte und möglichst ununterbrochene Außenfläche des gesamten Implantats zu gewährleisten. Je nach Form des Kupplungsabschnitts des Grundkörpers kann der Durchmesser des Abutments auch gleichmäßig konstant sein oder um seinen Umfang variieren, um eine zum Koppelbereich des Grundkörpers passende Schnittstelle zu ergeben.

Mögliche Größen und Formen der äußeren Gestalt des Grundkörpers und des Abutments sind aus dem Stand der Technik bekannt (z.B. zylindrisch mit kreisförmiger oder elliptischer Grundfläche, konisch). Bevorzugt sind zweidimensionale geometrische Grundformen, die keine Ecken aufweisen, wie Kreise und Ellipsen.

Der Schaftabschnitt des Grundkörpers erstreckt sich in entlang der Längsachse des Grundkörpers. Bevorzugt wird er vom apikalen zum koronalen Teil entlang der Längsachse breiter. Der Durchmesser am apikalen Ende ist bevorzugt kleiner als der Durchmesser am koronalen Ende. Die Form des Kupplungsabschnitts ist in einer bevorzugten Ausgestaltung zylindrisch, zylindrisch elliptisch oder konisch, wobei sich entlang der Längsachse Segmente verschiedener Geometrie abwechseln können. Der Schaftabschnitt kann aus einer dichten Keramik bestehen und an der Außenfläche eine gewundene (Gewinde), poröse, geschäumte oder raue Oberfläche aufweisen. Die äußere Oberfläche hat bevorzugt eine Rauheit Ra von 0,2 bis 1,6 µm, bevorzugt 0,5 bis 0,8 µm, um eine gute Haftung der Knochenzellen und des Zahnfleischgewebes zu gewährleisten. Die Rauheit der Außenfläche kann durch Sandstrahlen oder Ätzen des Körperteils des Grundkörpers erzielt werden. Die Außenfläche kann auch mindestens ein Gewinde und/oder Poren aufweisen. Das Gewinde ragt bevorzugt 0,2 bis 1 mm, noch bevorzugter 0,5 bis 0,8 mm aus der Oberfläche des Schaftabschnitts heraus. Weist der Schaftabschnitt eine poröse Außenfläche auf, haben die Poren einen mittleren Durchmesser von 0,2 bis 1 mm, bevorzugt 0,5 bis 0,8 mm. Eine poröse Außenfläche des Körperteils kann zusätzlich mit einem Gewinde versehen sein, und eine mit einem Gewinde versehene Außenfläche des Körperteils kann einen oder mehrere poröse Abschnitte tragen. Poren und Gewindegänge führen zu einem verbesserten Halt des Schaftabschnitts im Knochen, da Zellen um und in diese Strukturen einwachsen können.

In einer Ausgestaltung ist der Schaftabschnitt mit einem Außengewinde versehen, das sich vom apikalen Ende in Richtung des koronalen Endes erstreckt und zumindest Teile der Außenfläche des Grundkörpers bedeckt.

Die poröse Außenfläche besteht bevorzugt aus einem Keramikschaum.

Der Kupplungsabschnitt des Grundkörpers erstreckt sich ebenfalls entlang der Längsachse des Grundkörpers und stellt das koronale Ende des Grundkörpers dar.

Der Kupplungsabschnitts kann eine zylindrische Form mit kreisförmiger oder elliptischer Grundfläche umfassen, und konische Segmente aufweisen. Bevorzugt ist der Kupplungsabschnitt des Grundkörpers zylindrisch oder konisch, besonders bevorzugt ist der Kupplungsabschnitt zylindrisch mit kreisförmiger Grundfläche. Der Kupplungsabschnitt kann aus einer dichten (> 95%, bevorzugt > 99% der theoretischen Dichte) Keramik bestehen und kann eine poröse, geschäumte oder raue Oberfläche an der Außenfläche aufweisen. Die äußere Oberfläche hat bevorzugt eine Rauheit Ra von 0,2 bis 1,6 µm, bevorzugter 0,5 bis 0,8 µm, um eine gute Haftung der Knochenzellen sowie des Zahnfleischgewebes zu gewährleisten. Die Rauheit der Außenfläche kann durch Sandstrahlen oder Ätzen des Kupplungsabschnitts erreicht werden. Die Außenfläche des Kupplungsabschnitts kann, wie für den Schaftabschnitt beschrieben, Gewinde und/oder Poren aufweisen.

Das Abutment erstreckt sich auch entlang der Längsachse. Die Form des Abutments kann konisch oder zylindrisch mit kreisförmiger oder elliptischer Grundfläche sein. Segmente unterschiedlicher Geometrie können sich dabei abwechseln. Das Abutment kann aus einer dichten Keramik bestehen und an der Außenfläche eine poröse, geschäumte oder raue Oberfläche aufweisen. Das koronale Ende des Abutments weist aus dem Stand der Technik bekannte Merkmale auf, um eine Verbindung mit dem Zahnersatz, der Krone, zu gewährleisten.

Sowohl der Grundkörper als auch das Abutment können aus Titan, Titanlegierung, Polymeren, oder Keramik gebildet sein. Bevorzugte Polymere sind dabei PE, PEK, PEKK, PEEK oder CFK-PEEK, besonders bevorzugt sind faserverstärkte Polymere aus der vorgenannten Liste. Bevorzugt werden der Grundkörper und/oder das Abutment aus Keramik hergestellt, besonders bevorzugt aus Zirkoniumdioxid oder Zirkoniumdioxidlegierungen, wie z. B. Yttriumoxid-stabilisiertes Zirkoniumdioxid (Y-TZP) oder Aluminiumoxid-vorgespanntes Zirkoniumdioxid (ATZ) oder Ceroxidstabilisiertes Zirkoniumdioxid. In einer bevorzugten Ausgestaltung sind der Grundkörper und das Abutment aus demselben Material gefertigt.

Das Abutment und der Grundkörper sind im implantierten Zustand übereinander positioniert, wobei das untere Ende, das apikale Ende des Abutments und das koronale Ende des Grundkörpers, die zueinander passende Schnittstelle bilden, und miteinander in Kontakt stehen. Das Implantat wird mit einem Verbindungselement befestigt. Der Grundkörper weist eine Ausnehmung auf, in die das Verbindungselement eingeführt wird. Die Ausnehmung, eine Bohrung, ein Hohlraum, erstreckt sich durch den Kupplungsabschnitt vom koronalen Ende des Grundkörpers in Richtung des Schaftabschnitts des Grundkörpers. Bevorzugt erstreckt sich die Ausnehmung in den Schaftabschnitt des Grundkörpers. In einer bevorzugten Ausgestaltung ist die Ausnehmung eine zentrale Aussparung, die sich mittig des Grundkörpers befindet und sich entlang der Längsachse ausgehend vom koronalen Ende in Richtung des apikalen Endes erstreckt. Bevorzugt hat die Ausnehmung einen zylindrischen Teil am koronalen Ende des Grundkörpers. Weiter bevorzugt ist die zylindrische Achse Teil der Längsachse des Grundkörpers. Der Zylinder ist bevorzugt ein rechtwinkliger Zylinder mit einer kreisförmigen Grundfläche, kann aber auch eine elliptische oder anderweitig nicht kreisförmige Grundfläche aufweisen. Die Ausnehmung erstreckt sich teilweise in den Schaftabschnitt. Der Schaftabschnitt ist am apikalen Ende des Grundkörpers geschlossen. In einer bevorzugten Ausgestaltung erstreckt sich die Ausnehmung über maximal 3/4 der Gesamtlänge des Grundkörpers in Richtung des Schaftabschnitts des Grundkörpers. ¼ der Länge des Grundkörpers am apikalen Ende ist solide ausgebildet, d.h. die Ausnehmung endet vor diesem Abschnitt des Grundkörpers. Die Ausnehmung, die Bohrung, kann ferner im inneren einen Gewindeabschnitt umfassen, der bevorzugt im apikalen Ende der Aussparung angeordnet ist. Eine innere Verbindungsaussparung, die einen Abschnitt mit Innengewinde aufweist, ist dazu bestimmt, ein Verbindungselement aufzunehmen, welches zur Sicherung des auf dem Grundkörper montierten Abutments verwendet wird.

Die minimale Wandstärke um die Ausnehmung im Inneren des Grundkörpers beträgt bevorzugt ≥ 0,65 mm, noch bevorzugter ist eine Wandstärke ≥ 0,8 mm, besonders bevorzugt ist eine Wandstärke ≥ 1 mm.

Am koronalen Ende, dem oberen Bereich des Grundkörpers, befindet sich der Kupplungsabschnitt. Der Kupplungsabschnitt des Grundkörpers umfasst einen Koppelbereich, der sich zwischen der Außenfläche des Grundkörpers und der Ausnehmung befindet. Der Koppelbereich umfasst den Bereich zwischen der Kante von der Außenfläche des Grundkörpers, dem äußeren Übergangsbereich, bis zur Kante in die Öffnung ins Innere des Grundkörpers, dem inneren Übergangsbereich und umschließt die Ausnehmung. Bevorzugt ist die Kante, die sich in die Ausnehmung hinein erstreckt, und/oder die Kante, die sich in zur Außenfläche des Grundkörpers hin erstreckt, abgerundet, um Verschleiß und Beschädigung des Koppelbereichs zu vermeiden. Diese Oberfläche des Koppelbereichs wird bevorzugt mit Toleranzen von weniger als 0,05 mm feinbearbeitet und kann gebrannt, geschliffen oder poliert sein.

Der Koppelbereich ist konkav oder konvex gebogen. Die Radien, mit denen die Kanten abgerundet sind, sowie der Radius des Koppelbereichs, der konkav oder konvex geformt ist, können gleich oder unterschiedlich sein, je nach Ausgestaltung. Bevorzugt sind die Radien des inneren und des äußeren Übergangsbereichs sowie des Mittelteils im Verlauf des Koppelbereichs um die Ausnehmung herum gleichmäßig konstant und weisen keine Unterbrechungen auf. Dies hat zur Folge, dass an jeder Stelle des Koppelbereichs der gleiche Radius vorhanden ist.

In einer bevorzugten Ausgestaltung ist der Koppelbereich des Grundkörpers konkav ausgebildet und die Radien der Übergangsbereiche gehen tangential in den Koppelbereich über. Es entsteht eine konkave Oberfläche mit kontinuierlich ineinander übergehenden Radien.

In einer Ausgestaltung erstrecken sich die gerundeten Übergangsbereiche derart, dass sie auf die Innen- und Außenflächen treffen, d.h. es entsteht ein vollständig gerundeter Koppelbereich ohne Kanten, bzw. stufenförmigen Übergängen.

Der konvex ausgebildete Koppelbereich des Kupplungsabschnitts des Grundkörpers wird als männlicher Teil bezeichnet. Das apikale Ende des Abutments, dessen konkav ausgebildete Koppelbereich ist mit einem passenden weiblichen Teil versehen. Die beiden Teile bilden die zueinander passende Schnittstelle.

Der männlich ausgebildete Koppelbereich am koronalen Ende des Grundkörpers ist dazu bestimmt, vom weiblich ausgebildeten Koppelbereich des apikalen Endes des Abutments aufgenommen zu werden.

Im unteren Bereich des Abutments, dem Ende, das im montierten Zustand auf den Grundkörper trifft, befindet sich der konkav ausgebildete Koppelbereich, Teil der Schnittstelle. Der Koppelbereich des Abutments befindet sich zwischen dem äußeren Übergangsbereich, der Außenfläche des Abutments bis zum inneren Übergangsbereich, der Öffnung für ein externes Verbindungselement. Wenn das Abutment ein integriertes Verbindungselement aufweist, befindet sich der innere Übergangsbereich zwischen dem Koppelbereich und dem integrierten Verbindungselement.

Auch auf Seiten des Abutments sind die inneren und äußeren Übergangsbereiche, bevorzugt abgerundet, um Verschleiß und Beschädigung des Abutments zu vermeiden. Der Koppelbereich des Abutments erstreckt sich von zwischen den inneren und äußeren Übergangsbereichen. Dieser Bereich kann konkav oder alternativ konvex geformt sein, entgegengesetzt zur Form des Koppelbereichs des Grundkörpers. Ein konvex geformter Koppelbereich des Grundkörpers passt zu einem konkav geformten Koppelbereich des Abutments und umgekehrt. Die Radien, mit denen die Übergangsbereiche gerundet sind, sowie der Radius des Koppelbereichs, der konkav oder konvex geformt ist, können gleich oder unterschiedlich sein. Bevorzugt sind die Radien des inneren und des äußeren Übergangsbereichs sowie des Koppelbereichs im Verlauf des Koppelbereichs um die Öffnung bzw. das Verbindungselement herum gleichmäßig konstant und weisen keine Unterbrechungen auf.

Die geometrische Form des Koppelbereichs des Abutments ist d der geometrischen Form des Koppelbereichs des Grundkörpers angepasst und folgt dessen Gestaltung. Ist die geometrische Form des Koppelbereichs des Grundkörpers gleichmäßig über den Umfang des Grundkörpers ausgebildet, ist die geometrische Form des Koppelbereichs des Abutments ebenfalls gleichmäßig über den Umfang des Abutments ausgebildet.

Der konvexe Koppelbereich des Abutments und der konkave Koppelbereich des Grundkörpers bilden die Schnittstelle. Die Koppelbereiche des Grundkörpers und des Abutments, die konvex bzw. konkav ausgebildet sind berühren sich und bilden eine Kontaktlinie. Die Kontaktlinie entsteht, da die beiden aufeinandertreffenden Koppelbereiche, gekrümmt ausgebildet sind, wobei der konvex ausgebildete Koppelbereich eine stärkere Krümmung als der konkav ausgebildete Koppelbereich aufweist. Die beiden Koppelbereich sind so ausgebildet, dass nach erfolgtem Zusammenfügen des Grundkörpers und des Abutments eine Kontaktline entsteht. Die erfindungsgemäße Schnittstelle führt nach der Montage zu einer Kontaktlinie. Dadurch werden einzelne Kontaktpunkte, an denen Belastungsspitzen entstehen können, vermieden.

In der Draufsicht entlang der Längsachse erscheint die Kontaktlinie kreisförmig, elliptisch, hyperbolisch oder sie entspricht einer kantenfreien Freiform, einer unregelmäßigen Ellipse, einem unregelmäßigen Kreis. Bevorzugt ist die Kontaktlinie kreisförmig oder zumindest annähernd kreisförmig (innerhalb der Fertigungstoleranzen) oder regelmäßig elliptisch. Bevorzugt bilden beide Koppelbereiche, wenn sie miteinander in Kontakt stehen, eine geschlossene Kontaktlinie, d.h. innerhalb der Koppelbereiche treffen sich der Grundkörper und das Abutment und bilden eine geschlossene Kontaktlinie, die mit Ausnahme von Fertigungstoleranzen keine beabsichtigten Unterbrechungen, z.B. aufgrund von Aussparungen oder Einkerbungen innerhalb eines Koppelbereichs, aufweist. Die Fertigungstoleranzen können zu minimalen Abweichungen und Diskrepanzen innerhalb der geschlossenen Kontaktlinie führen. In einer bevorzugten Ausgestaltung ist die Kontaktlinie kreisförmig oder zumindest annähernd kreisförmig (innerhalb der Fertigungstoleranzen). Das erleichtert die Herstellung und das Einsetzen des Implantats. Außerdem führt eine kreisförmige Kontaktlinie auch zu einer Selbstzentrierung des Abutments zu dem Grundkörper.

In der bevorzugten Ausgestaltung beträgt der Durchmesser der Kontaktlinie in der Draufsicht, d.h. wenn die Kontaktlinie in eine Ebene hineinprojiziert wird, 99 % - 40 % des Nenndurchmessers des Grundkörpers. Der Nenndurchmesser des Grundkörpers ist der maximale Durchmesser des Kupplungsabschnitts des Grundkörpers. Bevorzugt beträgt der Durchmesser der Kontaktlinie 95 % - 65 %, bevorzugt 90 % - 80 % des Nenndurchmessers des Grundkörpers.

In einer Ausgestaltung sind die konkav und/oder konvex geformten Koppelbereiche vom Abutment und Grundkörper, Freiformkurven, die nicht parallel zueinander verlaufen. Der konkave ausgebildete Koppelbereich ist etwas weniger gekrümmt als der konvex ausgebildete Koppelbereich. Dadurch ist sichergestellt, dass der konvexe Koppelbereich in den vom konkaven Koppelbereich gebildeten Raum passt. Im zusammengebauten Zustand vom Abutment und Grundkörper sind die vorbeschriebenen Koppelbereiche an Ihren Enden, an den inneren und äußeren Übergangsbereichen beabstandet zueinander angeordnet sind. Der Abstand reduziert sich, ausgehend von den inneren und äußeren Übergangsbereich in Richtung zur Mitte der Koppelbereiche, wo diese im zusammengebauten Zustand in Kontakt stehen. Es entsteht die Kontaktlinie. In einer anderen Ausgestaltung sind die konkav und konvex geformten Koppelbereiche hyperbolische oder diametrale Teile einer Ellipse.

In einer Ausgestaltung beträgt der Unterschied der Biegung, der Wölbung der konkaven bzw konvexen Bereiche, über die Distanz von innerem zur äußerem Übergangsbereich der beiden gebogenen, bzw. gewölbten, Koppelbereiche mindestens das 2-fache der Fertigungstoleranz (bevorzugt ist die Fertigungstoleranz maximal 0,05 mm), bevorzugt mindestens die 5-fache Fertigungstoleranz, wobei der konkave Koppelbereich weniger stark gebogen, bzw. gewölbt, ist als der konvexe Koppelbereich. Dadurch wird ein Linienkontakt zwischen den Koppelbereichen gewährleistet. Erfindungsgemäß sind die geometrischen Formen der Koppelbereiche des Abutment und des Grundkörpers unterschiedlich ausgebildet. Die geometrischen Formen weichen mindestens so weit voneinander ab, dass im montierten Zustand ein Linienkontakt entsteht. Dabei ist es unerheblich, ob die Abweichungen der geometrischen Form der Koppelbereiche aus dem Design oder durch Toleranzen bei der Herstellung entstehen. Wenn der Unterschied zwischen den Biegungen der Koppelbereiche zu gering ist, kann anstelle von Linienkontakt ein Flächenkontakt auftreten. Die Eigenschaften, z. B. der Krafteintrag, eines Flächenkontakts sind anders als die eines Linienkontakts und für die sichere dauerhafte Anwendung der Schnittstelle von Nachteil. Für ein erfindungsgemäßes Implantat aus keramischen Werkstoffen wird ein Linienkontakt vorgesehen.

In einer bevorzugten Ausgestaltung sind sowohl der konkave als auch der konvexe Koppelbereich, im Querschnitt ein Kreissegment. Der Mittelpunkt des Kreises, der dem Kreissegment entspricht, das den konkaven Koppelbereich bildet, liegt innerhalb des Teils, der den konvexen Koppelbereich umfasst. Der Mittelpunkt des Kreises, der dem Kreissegment entspricht, das den konvexen Koppelbereich bildet, liegt innerhalb einer gedachten Verlängerung des Teils, der den konkaven Koppelbereich umfasst. Beide Kreissegmente haben einen Radius. Der Radius des Kreises, der den konkaven Koppelbereich bildet, ist 0,1-10 %, bevorzugt 1-5 % größer als der Radius des Kreises, der den konvex geformten Koppelbereich bildet. In einer bevorzugten Ausgestaltung liegt der Radius des konvexen Koppelbereichs im Bereich von 10 bis 50 % des Nenndurchmessers des Grundkörpers.

Im zusammengebauten Zustand sind die gegenüberliegenden Enden der Koppelbereiche beabstandet zueinander angeordnet. Dieser Abstand ist am äußeren und eine am inneren Übergangsbereich der Koppelbereiche vorhanden. Bevorzugt ist dieser Abstand und in dessen Folge der dadurch gebildete Spalt so klein wie möglich. Dies wird dadurch erreicht, dass der konvexe Koppelbereich nur geringfügig stärker gebogen ist als der konkave Koppelbereich. Erfindungsgemäß sind die Koppelbereiche so ausgebildet, dass im montierten Zustand der Abutments und des Grundkörpers eine Kontaktlinie entsteht wobei der Abstand der Koppelbereiche im Übergangsbereich, d.h. in den Endbereichen der Koppelbereiche so gering wie möglich ist. Bei einer Ausgestaltung mit kreisförmigen Geometrien als konkave und konvexe Koppelbereiche wird dies dadurch erreicht, dass die Nennradien der konvexen und konkaven Koppelbereiche nur geringfügig voneinander abweichen. Der Radius des konvexen Koppelbereichs muss kleiner sein als der Radius des konkaven Koppelbereichs, um sicherzustellen, dass der konvexe Koppelbereich in den von dem konkaven Koppelbereich gebildeten Raum passt. Bevorzugt beträgt das Verhältnis konvexer Radius: konkaver Radius 0,8 - 0,999:1, noch bevorzugter ist ein Verhältnis von 0,9 - 0,98:1 und besonders bevorzugt ist ein Verhältnis von 0,94 - 0,96:1. In einer Ausgestaltung beträgt die Differenz zwischen den beiden Radien das 5-fache der Fertigungstoleranz (beispielsweise 0,05mm), bevorzugt das 10-fache der Fertigungstoleranz, wobei der konkave Radius größer ist als der konvexe Radius, um den Linienkontakt sicherzustellen.

Die erfindungsgemäße Schnittstelle aus einem konvexen und einem konkaven Koppelbereich, entsprechend den vorbeschriebenen Angaben, ist vorteilhaft, unabhängig von Parametern wie sie bei der Herstellung von keramischen Produkten wie beispielsweise das Schrumpfen beim Sintern und/oder der Materialabtrag beim Polieren bestehen. Die beiden erfindungsgemäß ausgebildeten Koppelbereiche bilden immer einen Linienkontakt. Bei einem kreisförmigen Umfang der Mittelteile eines Koppelbereichs wird die Kontaktlinie in der Draufsicht einen Kreis bilden. Dieser umschließt die Ausnehmung des Grundkörpers und die Öffnung, bzw. das Verbindungselement des Abutments. Diese erfindungsgemäße Schnittstelle
- schützt die Koppelbereiche und somit das Abutment und den Grundkörper vor Spannungen und Belastungen,
- gewährleistet eine Selbstzentrierung der beiden sich berührenden Teile.

In einer Ausgestaltung ist die erfindungsgemäße Schnittstelle symmetrisch um die Längsachse der Zahnimplantat-Anordnung angeordnet. Die Kontaktlinie, gebildet durch den konvexen und der konkaven Koppelbereich, liegt in einer Ebene. Diese Ebene kann senkrecht oder in einem Winkel zur Längsachse angeordnet sein.

In einer anderen Ausgestaltung ist die Kontaktlinie zwischen dem Abutment und dem Grundkörper der erfindungsgemäßen Schnittstelle in wenigstens einem Bereich beabstandet angeordnet, in Bezug zu einer Ebene die senkrecht zur Längsachse der Zahnimplantat-Anordnung ausgerichtet ist. Dies bedeutet die Kontaktlinie weist wenigstens ein Tal, eine Vertiefung und wenigstens eine Spitze, eine Erhöhung zu dieser Ebene auf. Eine Vertiefung des Koppelbereichs des Grundkörpers liegt einer Erhöhung des Koppelbereichs des Abutments gegenüber. Der tiefste Punkt einer Vertiefung des Koppelbereichs des Grundkörpers stellt den Punkt des maximalen Abstands des konvexen oder konkaven Koppelbereichs dar, der eine Ebene senkrecht zur Längsachse schneidet, die weiter in Richtung des apikalen Ende des Grundkörpers liegt als die Ebenen, die die nächsten Punkte auf beiden Seiten des Verlaufs der Koppelbereiche schneiden. Der höchste Punkt einer Erhöhung ist das Gegenteil einer Vertiefung und stellt den Punkt des maximalen Abstandes des konvexen oder konkaven Koppelbereichs dar, der eine Ebene senkrecht zur Längsachse schneidet, die weiter in Richtung des koronalen Ende des Grundkörpers liegt als die Ebenen, die die nächsten Punkte auf beiden Seiten des Verlaufs der Koppelbereiche schneiden. Gleiches gilt mutatis mutandis für eine Erhöhung oder Vertiefung des Koppelbereichs des Abutments. Die tiefste bzw. höchste Stelle einer Vertiefung bzw. Erhöhung stellt somit einen Scheitelpunkt dar.

In einer Ausgestaltung mit einer Erhöhung und einer Vertiefung ist die Kontaktlinie in einem Winkel zur Längsachse angeordnet. Aufgrund der winkelig angeordneten Kontaktlinie in Verbindung mit den dadurch möglichweise auftretenden Scherkräften, ist für eine stabile Verbindung zwischen dem Abutment und dem Grundkörper erforderlich, dass das Verbindungselement, bevorzugt die Schraube, eine Länge von mindestens dem 1,5-fachen ihres Durchmessers aufweist.

In einer bevorzugten Ausgestaltung weist der Verlauf des Koppelbereichs mehr als eine Vertiefung und Erhöhung auf, bevorzugt 2, 3 oder 4 Vertiefungen und Erhöhungen. Weiter bevorzugt ist eine gerade Anzahl von Vertiefungen und Erhöhungen. In einer bevorzugten Ausgestaltung sind die Abstände zwischen den Vertiefungen und Erhöhungen des Koppelbereichs symmetrisch, d. h. der Abstand zwischen jeder Vertiefung und der darauffolgenden Erhöhung (und umgekehrt) ist gleich. In einer Ausgestaltung weist der Koppelbereich des Grundkörpers eine erste Erhöhung, eine zweite Erhöhung und eine erste Vertiefung zwischen der ersten Erhöhung und der zweiten Erhöhung sowie eine zweite Vertiefung zwischen der zweiten Erhöhung und der ersten Erhöhung auf und bevorzugt liegen sich die Erhöhungen und Vertiefungen diametral gegenüber. Gleiches gilt mutatis mutandis für das Abutment unter der Vorgabe, dass die Geometrie zum Grundkörper passt.

In einer besonders bevorzugten Ausgestaltung hat Koppelbereich zwei Vertiefungen und zwei Erhöhungen und ist bevorzugt symmetrisch ausgebildet, d. h. die Vertiefungen und die Erhöhungen sind gegenüberliegend im Koppelbereich angeordnet. Ein so ausgebildeter Koppelbereichs fungiert sowohl als Verdrehsicherung als auch als Selbstsicherungselement. Im Zuge der Montage wird, sobald die Vertiefungen und Erhöhungen des Grundkörpers und des Abutments aufeinander ausgerichtet sind, ein Verbindungselement durch die Öffnung des Abutment in die Ausnehmung des Grundkörpers eingebracht und im Inneren des Grundkörper befestigt. Nachdem das Verbindungselement befestigt wurde, ist eine Drehung des Abutments auf dem Grundkörper ausgeschlossen, da der Koppelbereich für eine Drehbewegung eine Höhenverschiebung des Abutments erfordert, d. h. das Abutment muss sich nach oben verschieben, um die Vertiefungen und Erhöhungen auszugleichen und eine Drehung zu ermöglichen. Diese Höhenverschiebung wird durch ein durch das Verbindungselement ausgeschlossen. Darüber hinaus wird bei der Montage das Abutment auf dem Grundkörper, so lange radial auf dem Grundkörperbewegt, bis die Erhöhungen und Vertiefungen ineinandergreifen, d.h. eine Erhöhung des einen Koppelbereichs in einer Vertiefung des anderen Koppelbereichs "einrastet". Im Stand der Technik dient das Verbindungselement nicht nur der Befestigung, sondern auch der Rotationssicherung und hat daher häufig eine nicht kreisrunde Außenform. Bei einer erfindungsgemäßen Anordnung der oben beschriebenen Ausgestaltungen mit Erhöhungen und Vertiefungen wird die Verdrehsicherung allein durch die Formgebung des Koppelbereichs sichergestellt. Das Verbindungselement hat lediglich die Aufgabe Abutment und Grundkörper zu sichern. Eine zusätzliche Verdrehsicherung muss das Verbindungselement nicht aufweisen. Daher kann das Verbindungselement, bevorzugt eine Schraube, einen kreisförmigen Querschnitt der Außenform, d.h. einen konischen oder zylindrischen Schraubenkörper, bevorzugt mit Gewinde, aufweisen. Diese Formgestaltung ermöglicht, dass das Verbindungselement in einer stabilen Form mit einem max. Durchmesser ausgebildet sein kann. Durch die Verwendung eines Verbindungselements mit einem maximal großen Durchmesser kann eine höhere Vorspannung und damit eine höhere Biegefestigkeit und Stabilität erreicht werden.

Ein Verbindungselement mit einer Verdrehsicherung weist eine Umfangsreduzierung an wenigstens einer Stelle auf. Dadurch wird der Querschnitt im Vergleich zu einem kreisförmigen Querschnitt reduziert, was insgesamt zu einer Stabilitätsreduzierung des Verbindungselements führt.

In einer weiteren bevorzugten Ausgestaltung ahmen die Vertiefungen und Erhöhungen den natürlichen Zahnfleischsaum nach, so dass der Anblick im implantierten Zustand ästhetisch ansprechend ist. Der künstliche Zahn oder die Krone kann dann in einer bevorzugten Ausgestaltung nur am Abutment befestigt werden und muss nicht den Grundkörper überdecken. Ist der Grundkörper im Kieferknochen platziert, wird der Verlauf des Zahnfleischs durch ihn nicht verändert oder modifiziert und ein natürliches Aussehen bleibt erhalten. In einer solchen Ausgestaltung liegen die wenigstens zwei Vertiefungen nicht auf einer Ebene die, senkrecht zur Längsachse angeordnet ist. Die Ebenen, auf denen die Vertiefungen liegen, sind beabstandet zueinander angeordnet. Eine Ebene ist weiter in Richtung des apikalen Endes angeordnet als die andere Ebene. Liegen 2 Erhöhungen und 2 Vertiefungen vor, liegt der Scheitelpunkt der ersten Vertiefung des Koppelbereichs des Grundkörpers koronaler als der Scheitelpunkt der zweiten Vertiefung. In einer anderen Ausgestaltung liegt der Scheitelpunkt der ersten Erhöhung apikaler als der Scheitelpunkt der zweiten Erhöhung. Die Anordnung der Scheitelpunkte kann gemäß den Anforderungen erfolgen. Alle Scheitelpunkte können in Bezug auf die Längsachse der Zahnimplantat-Anordnung beabstandet angeordnet sein. Dann liegen alle Scheitelpunkte auf zueinander beanstandeten senkrecht zur Längsachse liegende Ebenen. Gleiches gilt mutatis mutandis für die Erhöhungen und für den Verlauf des Koppelbereichs des Abutment. Erfindungsgemäße Koppelbereiche des Grundkörpers und Abutments sind formschlüssig zueinander und im implantierten Zustand ineinander einrasten ausgebildet. Deshalb bildet sich im montierten Zustand eine ununterbrochene Kontaktlinie zwischen Abutment und Grundkörper. Befindet sich im implantierten Zustand auf der bukkalen Seite der tiefste Scheitelpunkt kann eine ästhetisch ansprechende Gesichtsfront gewährleistet werden. Wird auch die orale Seite dem natürlichen Zahnfleischsaum angepasst, spiegelt eine erfindungsgemäße Zahnimplantat-Anordnung die Gegebenheiten naturgemäß wider. Dies bedeutet die geringstmögliche, im Idealfall keine, Irritationen für den Patienten.

Der Unterschied zwischen den einzelnen Vertiefungen und Erhöhungen beträgt bevorzugt 0,1 - 2 mm, weiter bevorzugt 0,3 - 1 mm und besonders bevorzugt 0,3 - 0,5 mm. In einer Ausgestaltung beträgt das Verhältnis zwischen dem Abstand benachbarter Scheitelpunkte, d.h. zwischen einer Vertiefung und sich in direkter Nachbarschaft befindlichen Erhöhung, und dem Durchmesser der Kontaktlinie 0,025 bis 0,5: 1.

Bevorzugt ist der Verlauf zwischen den Scheitelpunkten glatt und geschwungen, d.h. ohne scharfe Kanten und Stufen.

Die Befestigung des Abutments auf dem Grundkörper erfolgt mit einem Verbindungselement. Das Verbindungselement kann ein internes, ein bereits am Abutment befestigtes Verbindungselement sein, welches durch den Koppelbereich umschlossen ist und über diesen derart hinausragt, dass es in die Ausnehmung des Grundkörpers eingebracht und dort befestigt werden kann. Bevorzugt wird ein internes Verbindungelement in der Ausnehmung durch zusätzliche Haftmittel, dentale Befestigungsmittel wie Klebstoffe oder Zement befestigt.

In einer bevorzugten Ausgestaltung ist das Verbindungselement nicht am Abutment befestigt. Es handelt sich um ein externes Verbindungselement. Das Abutment weist eine Öffnung für den Durchgang eines Verbindungselements auf, die sich durch das Abutment vom apikalen zum koronalen Teil erstreckt. Bevorzugt handelt es sich bei dem externen Verbindungselement um eine Schraube, die in einen Gewindeabschnitt der Ausnehmung des Grundkörpers eingeschraubt wird. Die Öffnung des Abutments enthält Haltemittel, die auf das Verbindungselement abgestimmt sind, um einen festen Sitz und eine sichere Befestigung des Abutments zu gewährleisten. Bevorzugt befinden sich innerhalb der Öffnung ein oder mehrere Vorsprünge, die aus der Wand des Abutments in die Öffnung ragen. Dieser mindestens eine Vorsprung ist im montierten Zustand in Kontakt mit dem einem Bereich des externen Verbindungselements, z. B. dem Schraubenkopf. Bevorzugt ist der Vorsprung abgewinkelt, um eine maximale Kontaktfläche zwischen dem Bereich des Verbindungselements und dem Abutment zu gewährleisten. In einer bevorzugten Ausgestaltung ist der Vorsprung konisch. Der Vorsprung erstreckt sich ausgehend vom koronalen Teil des Abutments zum apikalen Teil des Abutments und verringert den Durchmesser der Öffnung in Richtung des apikalen Teils.

In einer bevorzugten Ausgestaltung bilden der Kopf des externen Verbindungselements und die entsprechenden Halteelemente, bevorzugt die Vorsprünge, des Abutments eine kreisförmige Berührungslinie nahe dem Schaft des Verbindungselements. Dies ermöglicht es, das Drehmoment beim Einsetzen, das zum Befestigen des Befestigungselements verwendet werden muss, zu erhöhen. Eine solche Berührungslinie kann durch konische Vorsprünge in der Öffnung des Abutments und einen konvexen Radius des Kopfes des externen Verbindungselements, bevorzugt des Schraubenkopfes, erreicht werden. Die vorbeschriebene geometrische Form, der konische Vorsprung kann alternativ am Verbindungselement vorgesehen sein. Dann ist der konvexe Radius am Vorsprung des Abutments angeordnet. Unabhängig der Anordnung der vorbeschriebenen geometrischen Formen ist eine kreisförmige Berührungslinie zwischen Verbindungselement und Abutment zur Sicherung der Zahnimplantat-Anordnung von Vorteil.

Das Verbindungselement kann aus dem Stand der Technik gewählt werden. Das Verbindungselement kann z.B. eine Schraube, ein Bajonettverschluss, ein Bolzen oder ein Sicherungsstift sein. Bevorzugt wird eine Schraube zum Fixieren des Abutments auf dem Grundkörper.

Bevorzugt ist das externe Verbindungselement eine Schraube. Die Schraube ist so geformt, dass sie in die Öffnung des Abutments passt und das Abutment auf dem Grundkörper befestigt. Bevorzugt ist der Kopf der Schraube konisch oder konvex geformt, damit er in die Öffnung eingepasst werden kann und mit der Öffnung und/oder ggf. im Inneren der Öffnung vorhandenen Halteelementen in kraftschlüssiger Verbindung steht. Weiter bevorzugt weist die Schraube ein Gewinde auf, um mit einem im Inneren der Ausnehmung des Grundkörpers vorhandenen Gewinde zusammenzuwirken.

Das externe Verbindungselement, bevorzugt die Schraube ist aus Metall, Metalllegierungen, Keramik oder Kunststoff gefertigt. Bevorzugt besteht das externe Verbindungselement bzw. die Schraube aus Polymeren wie PE, PEK, PEKK, PEEK oder CFK-PEEK, noch bevorzugter sind diese Polymere faserverstärkt. In einer bevorzugten Ausgestaltung bestehen der Grundkörper und das Abutment aus Keramik und das externe Verbindungselement, bevorzugt die Schraube, aus Kunststoff, bevorzugt aus Polymeren der vorgenannten Liste.

Bevorzugt ist die maximale Ausdehnung der Schraube entlang der Längsachse des Grundkörpers mindestens 1,5-mal, bevorzugt mindestens 2-mal so lang wie der maximale Durchmesser der Schraube.

In einer Ausgestaltung kann die Befestigung der Schraube durch die Verwendung eines Haftmittels, das auf die Schraube, das Abutment und/oder den Grundkörper aufgetragen wird, weiter verbessert werden. Bevorzugt handelt es sich bei dem Haftmittel um ein dentales Befestigungsmittel, ein Dentalkleber oder Dentalzement.

In einer bevorzugten Ausgestaltung erfolgt die Verankerung des Abutments nur mit dem externen Verbindungselement, d.h. rein mechanisch ohne Verwendung von Haftmitteln wie beispielsweise Klebstoffen oder Zement.

Gemäß einem weiteren Aspekt der vorliegenden Erfindung wird ein Dentalkit zur Verfügung gestellt, das Folgendes umfasst:
- Eine wie oben beschriebene Zahnimplantat-Anordnung und
- eine Zahnprothese, eine künstliche Krone.

Das Dentalkit ist zum vollständigen Ersatz eines Zahns bestimmt. Im montierten Zustand steht die Zahnprothese in Kontakt mit dem Abutment. Ggf. kann die Zahnprothese auch mit dem Grundkörper in Kontakt stehen, insbesondere wenn es sich um ein "Tissue-Level-Implantat handelt. Die Zahnprothese bedeckt zumindest Teile der Zahn-Implantat-Anordnung. Bevorzugt deckt die Zahnprothese den Teil der Zahnimplantat-Anordnung ab, der aus dem Zahnfleisch herausragt. Je nach Art des Implantats, "Tissue-Level" oder "Bone-Level", entweder nur das Abutment (Tisue-Level) oder Abutment und Grundkörper (Bone-Level) angedeckt.

Die erfindungsgemäße Zahnimplantat-Anordnung kann mit im Stand der Technik bekannten Fertigungsverfahren hergestellt werden (z.B. mit einer konventionellen CNC-Fräse oder mittels CIM oder anderen Abformverfahren).Da das Verbindungselements im Vergleich zu den aus dem Stand der Technik bekannten Zahnimplantaten eine reduzierten Querschnitt aufweist, können Zahnimplantat-Anordnungen mit einem Durchmesser des Grundkörpers unter 3,5 mm realisiert, und dabei die Stabilität und der Widerstand gegen Gewalteinwirkung weiterhin gewährleistet werden. Somit kann die erfindungsgemäße Zahnimplantat-Anordnung auch zum Ersatz von Schneidezähnen verwendet werden.

Die vorliegende Erfindung schlägt eine optimierte passende Schnittstellengeometrie vor, die eine möglichst keramikfreundliche Lastübertragung ermöglicht, indem
- der Druck der beiden Teile aufeinander von den Kanten der inneren und äußeren Übergangsbereiche beabstandet ist, da die Kontaktlinie sich im Koppelbereiche befindet,
- Punktbelastungen aufgrund der konkaven und konvexen Koppelbereiche minimiert sind und die Lastübertragung entlang einer Kontaktlinie gewährleistet ist, wodurch ein Keramik-auf-Keramik-Implantat ermöglicht wird und
- die Kanten der Übergangsbereiche abgerundet sind und dadurch Schnittverletzungen vermieden, die Stabilität erhöht und der Verschleiß verringert wird.

Weiterhin wird durch die erfindungsgemäße Zahnimplantat-Anordnung die Rotationssicherung in die Kontaktzone (Kupplungsabschnitt) von Grundkörper und Abutment integriert wodurch stabilere Verbindungselemente mit größerem Durchmesser, wie z.B. Schrauben, realisiert werden können und dadurch die Stabilität der Zahnimplantat-Anordnung erhöht wird.

Die vorliegende Erfindung ist darüber hinaus vorteilhaft, weil
- die übereinstimmenden Koppelbereiche der Schnittstelle, zu einer Selbstzentrierung des Abutments auf dem Grundkörper führen, wenn es mit dem Verbindungselement befestigt wird,
- die Koppelbereiche mit einem Vertiefungs-Erhöhungs-Verlauf zu einem Selbstverriegelungsmechanismus des Abutments auf dem Grundkörper führen,
- die geometrische Form der Koppelbereiche mit zwei unterschiedlichen Erhöhungen und Vertiefungen eine ästhetisch ansprechende Darstellung ermöglicht und
- die gerundeten Übergangsbereiche des Grundkörpers und des Abutments das Zahnfleischgewebe schützt, wodurch Entzündungen und Irritationen beim Patient vermeiden werden.

Zusammenfassend beschreibt die vorliegende Erfindung eine Zahnimplantat-Anordnung 1, zum Einsatz in den Kieferknochen eines Patienten. Die erfindungsgemäße Zahnimplantat-Anordnung 1 dient der Aufnahme einer Zahnprothese und umfasst einen Grundkörper 3, der das Zahnimplantat mit dem Alveolarknochen (d. h. dem Kieferknochen) verbindet, ein Abutment 2 und ein Verbindungselement 51. Der Grundkörper 3 und das Abutment 2 weisen jeweils einen Kopplebereich 14, 24 auf. Zusammen bilden diese Koppelbereiche 14, 24 eine Schnittstelle. Die Koppelbereiche 14, 24 sind konkav bzw. konvex und in Teilbereichen kongruent geformt. Abutment 2 und Grundkörper 3 werden mittels eines Verbindungselements 51 verbunden.

### Liste der Bezugszeichen

| | |
|---|---|
| 1 | Implantat-Anordnung |
| 2 | Abutment |
| 3 | Grundkörper |
| 5 | Durchmesser von 41 |
| 6 | Vertiefung von 41 |
| 7 | Erhöhung von 41 |
| 9 | Ebene |
| 10 | Schnittstelle |
| 11 | Abstand |
| 14 | Koppelbereich |
| 15 | Spalt |
| 16 | Innengewinde |
| 23 | Öffnung |
| 24 | Koppelbereich |
| 26 | Vorsprung |
| 27 | Apikales Ende von 2 |
| 28 | Abschnitt |
| 29 | Koronales Ende |
| 32 | Apikales Ende von 3 |
| 33 | Schaftabschnitt |
| 35 | Kupplungsabschnitt |
| 36 | Koronales Ende |
| 37 | Ausnehmung |
| 38 | Haltemittel |
| 41 | Kontaktlinie |
| 51 | Verbindungselement |
| 241 | Innere Übergangsbereich |
| 242 | Äußere Übergangsbereich |
| 313 | Durchmesser von 3 |
| 341 | Innere Übergangsbereich |
| 342 | Äußere Übergangsbereich |
| I-I' | Längsachse |
| II-II' | Achse |
| r3 | Radius von 14 |
| r2 | Radius von 24 |

Nachfolgend wird die Erfindung anhand von Figuren näher erläutert. Alle Figuren enthalten ausschnittweise, schematische Darstellungen der Erfindung und werden beispielhaft zur Erläuterung der Erfindung herangezogen. Spezielle Ausgestaltungen der Erfindung können von diesen Figuren abweichen. Die Darstellung der erfindungsgemäßen Zahnimplantat-Anordnung in den Figuren erfolgt skizzenhaft und in schematischer Weise.

Dabei zeigt
- Figur 1: einen Schnitt durch eine erfindungsgemäße Zahnimplantat-Anordnung,
- Figur 2: eine perspektivische Darstellung der Zahnimplantat-Anordnung gemäß Figur 1,
- Figur 3: einen Querschnitt entlang der Linie I-I' der Zahnimplantat-Anordnung gemäß Figur 2,
- Figur 4: einen Ausschnitt des Kontaktbereichs zwischen dem Grundkörper und dem Abutment,
- Figur 5: eine perspektivische Darstellung einer Zahnimplantat-Anordnung mit einer asymmetrischen Form im Bereich der Schnittstelle,
- Figur 6: eine perspektivische Darstellung des Grundkörpers einer erfindungsgemäßen Zahnimplantat-Anordnung, mit einer Erhöhung und einer Vertiefung im Bereich der Schnittstelle,
- Figur 7: einen Querschnitt des Grundkörpers gemäß Figur 6,
- Figur 8: eine perspektivische Darstellung des Grundkörpers einer erfindungsgemäßen Zahnimplantat-Anordnung, mit zwei Erhöhungen und zwei Vertiefungen im Bereich der Schnittstelle,
- Figur 9: einen Querschnitt des Grundkörpers gemäß Figur 8,
- Figur 10: eine perspektivische Darstellung des Grundkörpers einer erfindungsgemäßen Zahnimplantat-Anordnung, mit drei Erhöhungen und drei Vertiefungen im Bereich der Schnittstelle,
- Figur 11: einen Querschnitt des Grundkörpers gemäß Figur 10, und
- Figur 12: ein Foto der Schnittstelle zwischen Grundkörper und Abutment.

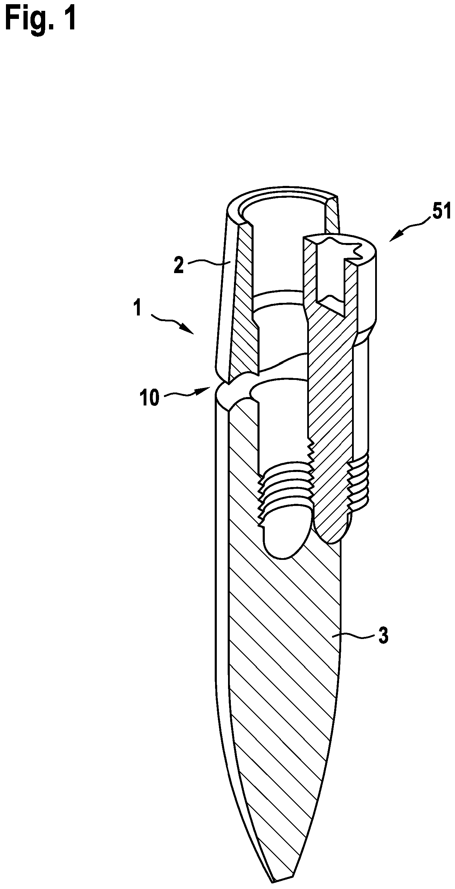

Figur 1 zeigt einen Schnitt durch eine erfindungsgemäße Implantat-Anordnung 1. Diese umfasst einen Grundkörper 3, ein Abutment 2 und ein Verbindungselement 51.

Im zusammengefügten Zustand ist das Abutment 2 mit dem Grundkörper 3 mittels einer Schnittstelle 10 formschlüssig verbunden. Erfindungsgemäß weist diese Schnittstelle 10 Merkmale auf, die eine exakte Positionierung des Abutments 2 zum Grundkörper 3 ermöglicht.

In den nachfolgenden Figuren werden die Merkmale der Implantat-Anordnung 1 detailliert beschrieben. Dabei gilt insbesondere für die Merkmale der Schnittstelle 10, dass die im Folgenden am Grundkörper 3 und Abutment 2 beschriebenen Merkmale auch an dem jeweils anderen Teil angeordnet sein können. Mit anderen Worten, in einem speziellen Ausführungsbeispiel, können die im Folgenden beschriebenen Merkmale der Schnittstelle 10, die den Grundkörper 3 betreffen, am Abutment 2 angeordnet sein. Dann ist es erforderlich, dass die im Folgenden beschriebenen Merkmale des Abutments 2 am Grundkörper 3 angeordnet sind. Dadurch kann die exakte Positionierung gewährleistet werden.

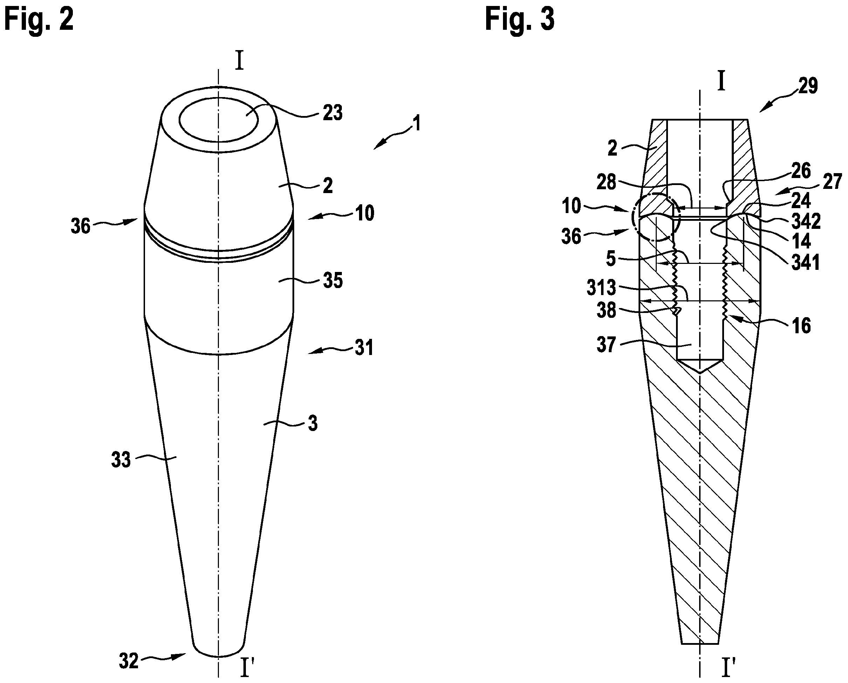

Figur 2 zeigt eine erfindungsgemäße Implantat-Anordnung 1 mit einem Grundkörper 3 und einem Abutment 2. Der Grundkörper 3 weist an seinem apikalen Ende 32 einen Schaftabschnitt 33 auf. Der Schaftabschnitt 33 verjüngt sich entlang der Längsachse I-I' in Richtung des apikalen Endes 32 und ist im Ausführungsbeispiel gemäß Figur 1 konisch ausgebildet. Am koronalen Ende 36 des Grundkörpers 3 ist ein Kupplungsabschnitt 35 angeordnet. Der Kupplungsabschnitt 35 ist einstückig mit dem Schaftabschnitt 33 des Grundkörpers 3 verbunden und ist Teil der Schnittstelle 10. Die am koronalen Ende 36 angeordnete Schnittstelle 10 ermöglicht eine formschlüssige Positionierung des Grundkörpers 3 mit dem Abutment 2.

Wie aus Figur 3 ersichtlich, weist der Grundkörper 3 am koronalen Ende 36 eine Ausnehmung 37 auf. In der Ausnehmung 37 ist ein Verbindungselement 51 (nicht dargestellt) angeordnet, mit dem der Grundkörper 3 und das Abutment 2 lösbar verbunden werden kann. Gemäß dem Ausführungsbeispiel nach Figur 2 und 3 ist der Kupplungsabschnitt 35 symmetrisch ausgebildet und weist an seinem koronalen Ende 36, an der Schnittstelle 10 einen Koppelbereich 14 auf. Dieser Koppelbereich 14 erstreckt sich vom zylinderförmig ausgebildeten äußersten Rand des Kupplungsabschnitts 35 bis zur Ausnehmung 37 und weist einen symmetrischen Verlauf auf. Der äußere Übergangsbereich 342 vom Kupplungsabschnitt 35 und der innere Übergangsbereich 341 von der Ausnehmung 37 in den Koppelbereich 14 sind bevorzugt gerundet ausgebildet. Der Koppelbereich 14 des Grundkörpers 3 ist durch eine konvexe Form gebildet und weist einen Radius r3 auf. Der Koppelbereich 14 ist Teil der Schnittstelle 10.

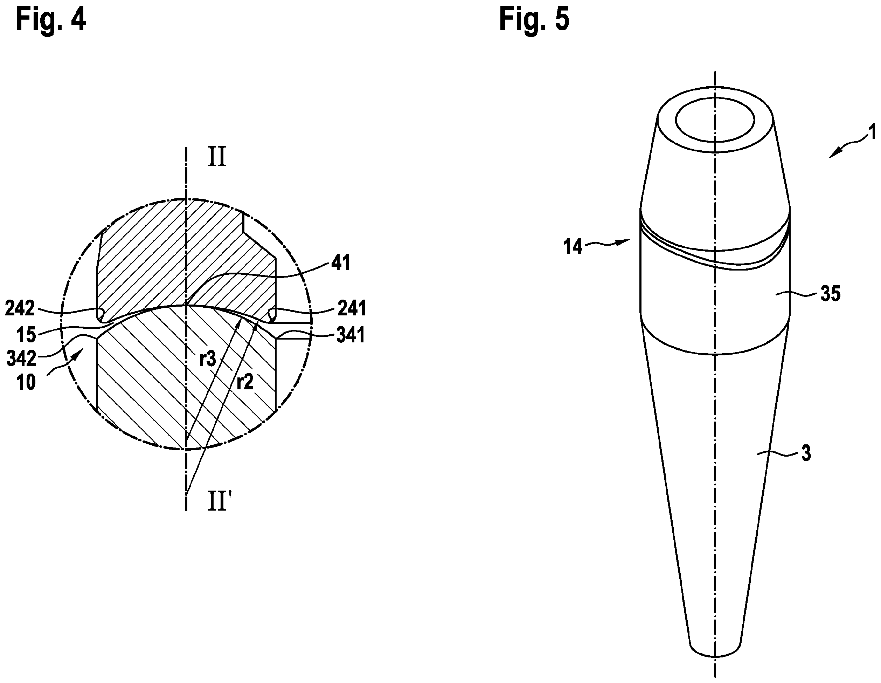

Das Abutment 2 ist in Form einer Hülse ausgebildet. Es weist eine durchgehende Öffnung 23 in Form einer Bohrung auf. Am apikalen Ende 27 des Abutments 2 ist ein Koppelbereich 24 angeordnet, der Teil der Schnittstelle 10 ist. Dieser Koppelbereich 24 erstreckt sich vom zylinderförmig ausgebildeten äußersten Rand des Abutments 2 bis zur durchgehenden Öffnung 23 und weist einen symmetrischen Verlauf auf. Der äußere Übergangsbereich 242 vom Abutment 2 und der innere Übergangsbereich 241 von der durchgehenden Öffnung 23 in den Koppelbereich 24 sind bevorzugt gerundet ausgebildet. Der Koppelbereich 24 hat eine konkave Form und weist einen Radius r2 auf (Figur 4).

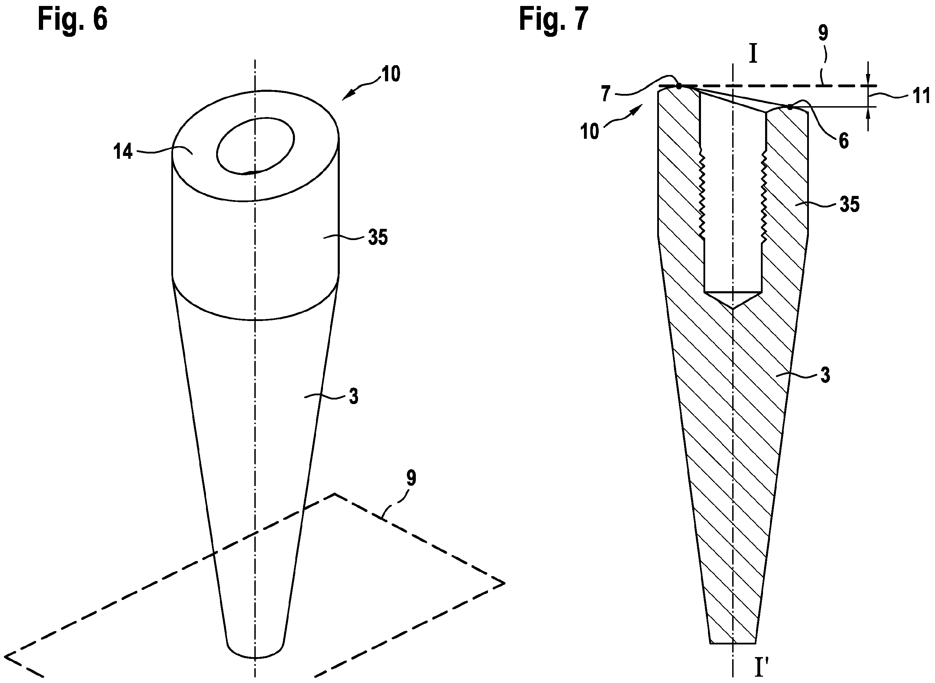

Erfindungsgemäß unterscheiden sich die Radien r2 und r3 in ihren Werten. Der Radius des konkav ausgebildeten Koppelbereichs 24 ist größer als der Radius des konvex ausgebildeten Koppelbereichs 14. Dadurch entsteht nach dem Zusammenfügen des Abutments 2 und des Grundkörpers 3 eine kreisförmige Kontaktlinie 41. Diese Kontaktlinie 41 ist im Bereich der Schnittstelle 10 angeordnet und ist durch eine Vielzahl aneinander gereihten Punkte gebildet. Die Kontaktlinie 41 weist einen Durchmesser 5 auf, der geringer ist als der Durchmesser 313 des Kupplungsabschnitts 35 (Figur 3). Der Mittelpunkt jedes der Durchmesser 5, 313 liegt auf der Achse I-I'. Der linienförmige Kontakt 41 weist gemäß dem Ausführungsbeispiel nach den Figuren 2 und 3 in Bezug auf eine imaginäre Ebene 9 (Figur 6) die senkrecht zur Längsachse I-I' angeordnet ist, einen konstanten Abstand zu dieser Ebene 9 auf. Mit anderen Worten, die Kontaktlinie 41 ist senkrecht zur Längsachse I-I' angeordnet. Alle Punkte auf der Kontaktlinie 41 weisen zur fiktiven Ebene 9 denselben Abstand auf.

Die Kontaktlinie 41 ist aus Figur 4 ersichtlich. Die Kontaktlinie 41 ermöglicht eine exakte Positionierung des Grundkörpers 3 mit dem Abutment 2. Aufgrund der unterschiedlichen Werte der Radien r2 und r3 entsteht im Bereich der Übergänge 341 und 241 sowie 342 und 242 ein Spalt. Wie aus Figur 4 ersichtlich ist, können die Übergangsbereiche 341 und 342 scharfkantig ausgeführt sein. Dies gilt auch für die Übergangsbereiche 241 und 242. Bevorzugt sind die Übergänge 341, 241, 342, 242 gerundet ausgebildet.

Wie aus Figur 4 ersichtlich, vergrößert sich der Spalt ausgehend von der Kontaktlinie kontinuierlich in Richtung der Übergangsbereiche. Im Ausführungsbeispiel gemäß Figur 4 beträgt der Wert (Abstand) des Spalts 15, der parallel zur Längsachse ermittelt wird, am Übergang des konkaven Koppelbereichs 14 zum Übergangsbereich 241, 242 maximal 0,05 mm, bevorzugt 0,03 mm, besonders bevorzugt 0,01 mm.

Figur 3 zeigt einen Schnitt durch den Grundkörper 3 und das Abutment 2. Die Form der Öffnung 23 ist ersichtlich. Zum Zusammenfügen des Grundkörpers 3 mit dem Abutment 2 wird ein Verbindungselement 51 (Figur 1), beispielsweise eine Schraube, in die Öffnung 23 eingeführt. Das Verbindungselement 51 erstreckt sich durch das Abutment 2 in den Grundkörper 3 hinein und wird durch Haltemittel 38 in dem Grundkörper 3 befestigt. Dazu weist der Grundkörper 3 Haltemittel 38 beispielsweise in Form eines Innengewindes 16 auf. Um eine sichere Verbindung zwischen dem Abutment 3 und dem Grundkörper 3 zu gewährleisten, umfasst das Abutment 2 wenigstens einen Vorsprung 26, der in die Öffnung 23 ragt. Im Ausführungsbeispiel gemäß Figur 3 erstreckt sich der Vorsprung 26 um den gesamten Umfang der Öffnung 23. Er ist kreisförmig und geneigt in Richtung des apikalen Endes 27 des Abutments 2 ausgebildet. Der Vorsprung 26, der als Phase ausgebildet ist, geht in einen zylindrischen Abschnitt 28 über. Dieser zylindrische Abschnitt 28 bildet einen Führungsbereich für das Verbindungselement 51 und weist einen geringeren Durchmesser auf als die Öffnung 23 am koronalen Ende 29 des Abutments 2. Der Vorsprung 26 steht in Wirkverbindung mit einem entsprechend ausgebildeten Bereich des Verbindungselements 51, wodurch eine sichere Verbindung zwischen dem Grundkörper 3 und dem Abutment 2 gewährleistet ist.

Figur 5 zeigt eine Implantat-Anordnung 1 ohne dem Verbindungselement 51. Die Schnittstelle 10 die den Kupplungsabschnitt 35 des Koppelbereichs 14 des Grundkörpers 3 umfasst ist asymmetrisch ausgebildet. Dies führt dazu, dass die Kontaktlinie 41 des Koppelbereichs 14 zur Ebene 9 geneigt angeordnet ist, wobei die Ebene 9 senkrecht zur Längsachse I-I' orientiert ist (Figur 7). Einzelne Punkte der Kontaktlinie 41 weisen zur fiktiven Ebene 9 verschiedene Abstände auf. Die Abstandsveränderungen sind konstant. Unter der Annahme, dass die Ebene 9 am koronalen Ende 29 des Kupplungsabschnitts 35 angeordnet ist, weist die Kontaktlinie 41 eine Erhöhung 7 auf, die die Ebene 9 schneidet. Ausgehend von dieser Erhöhung, der höchsten Stelle 7 der Kontaktlinie 41 neigt sich diese bis zu einer Vertiefung 6 der tiefsten Stelle der Kontaktlinie 41, kontinuierlich. An dieser Stelle 6 ist der Abstand 11 zur Ebene 9 am größten. Ausgehend von der tiefsten Stelle 6 steigt die Kontaktlinie 41 kontinuierlich bis zur höchsten Stelle 7 an. Die Kontaktlinie 41 gemäß Figuren 5, 6 und 7 weist an der Stelle 7 eine Erhöhung und an der Stelle 6 eine Vertiefung auf.

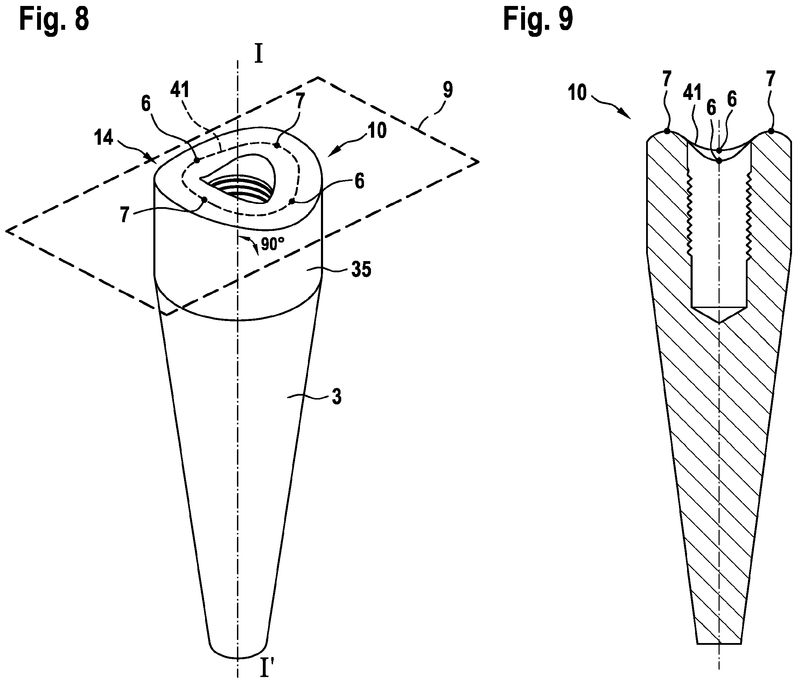

Die Kontaktlinie 41 der Schnittstelle 10 nach einem Ausführungsbeispiel gemäß der Figuren 8 und 9 weisen zwei Erhöhungen 7 (höchste Stelle) und zwei Vertiefungen 6 (niedrigste Stelle) auf. Ansonsten gelten die vorstehenden Merkmalsbeschreibungen mutatis mutandis.

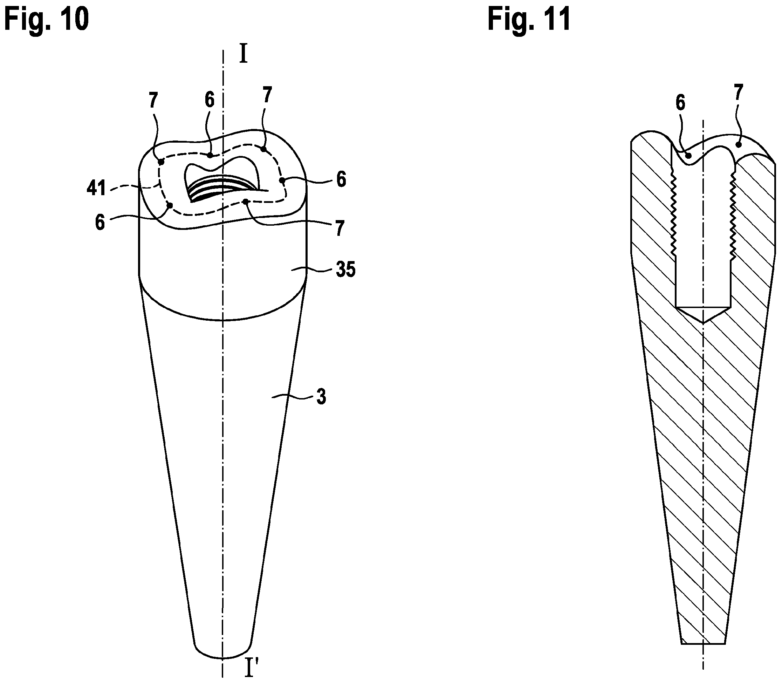

Die Figuren 10 und 11 zeigen den Grundkörper 3 einer erfindungsgemäßen Zahnimplantat-Anordnung 1, deren Kontaktlinie 41 drei Erhöhungen 7 und drei Vertiefungen 6 aufweist. Ansonsten gelten die vorstehenden Merkmalsbeschreibungen mutatis mutandis.

Die Kontaktlinie 41 einer Schnittstelle 10 einer erfindungsgemäßen Zahnimplantat-Anordnung 1 wird durch das Zusammenwirken des koronalen Endes 29 des Kupplungsabschnitts 35 und des apikalen Endes 27 des Abutments 2 gebildet. Die vorstehende Beschreibung der Form der Kontaktlinie 41 am Beispiel des Grundkörpers 3 gilt entsprechend für die Kontaktlinie 41 des Abutments 2. Das apikale Ende 27 des Abutments 2 und das koronale Ende 29 des Grundkörpers 3 sind in Teilbereichen kongruent ausgebildet, wobei sie sich die Werte der Durchmesser r2 und r3 unterscheiden. Der Durchmesser am konvex ausgebildeten Ende ist geringer als der Durchmesser am konkav ausgebildeten Ende. Dies ist unabhängig davon, an welchem Teil (Grundkörper 3, Abutment 2) der konvexe beziehungsweise konkave Teil angeordnet ist. Durch das Zusammenfügen des Grundkörpers 3 und des Abutments 2 entsteht die Kontaktlinie 41.

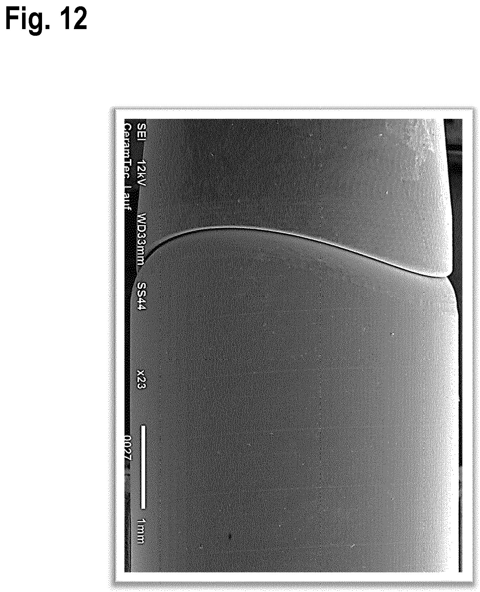

Figur 12 zeigt ein Foto eines Abutments 2 und eines Grundkörpers 3 im montierten Zustand. Das Abutment 2 hat eine maximale Länge (Ausdehnung entlang der Längsachse I-I') von 6 mm und einen maximalen Durchmesser von 3,9 mm. Der untere Teil des Abutments 2 ist zylindrisch, der obere Teil konisch, wobei sich die Breite entlang der Längsachse in Richtung des oberen Teils verringert. Der Kupplungsabschnitt 35 des Grundkörpers 3 ist zylindrisch. Der Grundkörper 3 ist 20 mm lang und hat einen Nenndurchmesser von 4 mm. Das Abutment 2 wird mit einer Schraube (nicht abgebildet) mit ISO M2-Gewinde am Grundkörper 3 befestigt. Das Abutment 2 weist den konkaven Koppelbereich 24 auf, der Grundkörper 3 den konvexen Koppelbereich 14. Die konkaven und konvexen Koppelbereiche sind Kreissegmente. Der Kreis des konkaven Koppelbereichs 24 hat einen Radius von 1,1 mm, der des konvexen Koppelbereichs 14, hat einen Radius von 1,0 mm. Die Mittelpunkte der Radien, der Koppelbereiche 14, 24, liegen innerhalb des Grundkörpers 3 und sind vom Umfang des Kupplungsabschnitt 35 des Grundkörpers 3 in einem Abstand von 0,5 mm angeordnet. Die Koppelbereiche, insbesondere der Bereich, in dem die Kontaktlinie 41 angeordnet ist, wurden im Grünzustand bearbeitet. Eine zusätzliche Bearbeitung in Form von glätten oder polieren im gebrannten Zustand ist nicht erforderlich. Die Übergangsbereiche 241, 242, 341, 342 sind mit einem Radius von 0,05 mm versehen. Die Koppelbereiche der Zahnimplantat-Anordnung weisen zwei Erhöhungen 7 und zwei Vertiefungen 6 auf. Die Erhöhungen 7, ebenso die Vertiefungen 6, schneiden Ebenen, die senkrecht zur Längsachse angeordnet sind. Die Ebenen in einem Abstand zueinander angeordnet. Der Abstand zwischen den maximalen Ausdehnungen der Erhöhungen 7 und Vertiefungen 6 beträgt 0,6 mm.

Wie auf dem Foto zu sehen ist, weisen die Koppelbereiche 14, 24 keine scharfen Kanten und Stufen auf. Alle Bereiche sind gekrümmt und abgerundet ausgebildet, so dass keine punktuellen Belastungen an Gewebe und Knochen entstehen. Irritationen in Form von Entzündungen, Beschädigungen etc. können dadurch nahezu ausgeschlossen im Idealfall vermieden werden. Bei diesem Ausführungsbeispiel geht der Koppelbereich 14 des Grundkörpers 3 tangential in die zylindrische Oberfläche des Kupplungsabschnitts des Grundkörpers 3 über.

## Patentansprüche

1. Eine Zahnimplantat-Anordnung (1) umfassend
einen Grundkörper (3), der zumindest teilweise in den Kieferknochen eingebracht wird, mit einer Ausnehmung (37), die sich vom koronalen Ende (36) des Grundkörpers (3) in Richtung des apikalen Endes (32) erstreckt und einem Koppelbereich (14) am koronalen Ende (36), der die Ausnehmung (37) umschließt und konkav oder konvex gewölbt ist,
ein Abutment (2), wobei das Abutment (2) einen apikalen Koppelbereich (24) aufweist, der zum Grundkörper (3) ausgerichtet ist und eine dem Koppelbereich (14) des Grundkörpers (3) entgegengesetzte konvexe oder konkave Geometrie aufweist,
wobei der Koppelbereich (14) des Grundkörpers (3) mit dem Koppelbereich (24) des Abutments (2) eine Schnittstelle bildet, und
ein Verbindungselement (51) zur Befestigung des Abutments (2) auf dem Grundkörper (3),
**dadurch gekennzeichnet, dass**
die Wölbung des konkaven Koppelbereichs kleiner als die Wölbung des konvexen Koppelbereichs ist.

2. Zahnimplantat-Anordnung nach Anspruch 1, wobei der Grundkörper (3) und/oder das Abutment (2) aus Titan, Titanlegierungen, Kunststoffen oder Keramik ist.

3. Zahnimplantat-Anordnung nach Anspruch 1 oder 2, wobei der Grundkörper (3) und/oder das Abutment (2) aus Keramik ist, bevorzugt aus Zirkoniumdioxid oder Zirkoniumdioxidlegierungen, wie z. B. Yttriumoxid-stabilisiertes Zirkoniumdioxid (Y-TZP) oder Aluminiumoxid- verstärktes Zirkoniumdioxid- (ATZ) oder Ceroxidstabilisiertes Zirkoniumdioxid.

4. Zahnimplantat-Anordnung nach Anspruch 1 bis 3, wobei das Abutment (2) und der Grundkörper (3) aus dem gleichen Material bestehen.

5. Zahnimplantat-Anordnung nach einem der vorangegangenen Ansprüche, wobei die Schnittstelle (10) einen konvexen Koppelbereich (14) des Grundkörpers (3) und einen konkaven Koppelbereich (24) des Abutments (2) aufweist.

6. Zahnimplantat-Anordnung nach einem der vorangegangenen Ansprüche, wobei die Koppelbereiche (14, 24) mit konkaver und konvexer Form eine Kontaktlinie (41), bevorzugt eine in der Draufsicht kreisförmige oder zumindest nahezu kreisförmige Kontaktlinie (41), bilden.

7. Zahnimplantat-Anordnung nach Anspruch 6, wobei der Durchmesser der Kontaktlinie (41) in der Draufsicht 40-99% des Durchmessers des Kupplungsabschnitts (35) des Grundkörpers (3) beträgt.

8. Zahnimplantat-Anordnung nach einem der vorangegangenen Ansprüche, wobei die Koppelbereiche (14, 24) des Abutments (2) und des Grundkörpers (3) wenigstens eine Erhöhung (7) und mindestens eine Vertiefung (6) aufweisen, bevorzugt eine gerade Anzahl an Erhöhungen (7) und Vertiefungen (6).

9. Zahnimplantat-Anordnung nach Anspruch 8, wobei der Koppelbereich des Grundkörpers (3) eine erste Erhöhung (7), eine zweite Erhöhung (7) und eine erste Vertiefung (6) zwischen der ersten Erhöhung (7) und der zweiten Erhöhung (7) sowie eine zweite Vertiefung (6) zwischen der zweiten Erhöhung (7) und der ersten Erhöhung (7) aufweisen und bevorzugt die Erhöhungen (7) und Vertiefungen (6) sich diametral gegenüber liegen.

10. Zahnimplantat-Anordnung nach Anspruch 9, wobei der am weitesten apikal gelegene Punkt der ersten Vertiefung (6) des Koppelbereichs (14) des Grundkörpers (3) koronaler liegt als der am weitesten apikal gelegene Punkt der zweiten Vertiefung (6) und/oder der am weitesten koronal gelegene Punkt der ersten Erhöhung (7) apikaler liegt als der am weitesten koronal gelegene Punkt der zweiten Erhöhung (7).

11. Zahnimplantat-Anordnung nach einem der vorangegangenen Ansprüche, wobei das Verbindungselement (51) ein externes Verbindungselement (51) ist, welches durch eine Öffnung (23) im Abutment (2), die sich vom koronalen (29) zum apikalen (27) Ende des Abutments (2) erstreckt in die Ausnehmung (37) des Grundkörpers (3) eingebracht wird.

12. Zahnimplantat-Anordnung nach Anspruch 11, wobei das Verbindungselement (51) eine Schraube ist.

13. Zahnimplantat-Anordnung nach Anspruch 11 oder 12, wobei das externe Verbindungselement (51) aus einem Kunststoff, bevorzugt aus PE, PEK, PEKK, PEEK oder CFK-PEEK, besonders bevorzugt aus Faser-verstärkten PE, PEK, PEKK, PEEK oder CFK-PEEK ist.

14. Dentalkit umfassend mindestens eine Zahnimplantat-Anordnung gemäß einem der vorangegangenen Ansprüche und mindestens eine Zahnprothese.

## Claims

1. A dental implant assembly (1) comprising
a main body (3) which is at least partly incorporated into the jawbone, comprising a recess (37) which extends from the coronal end (36) of the main body (3) in the direction of the apical end (32) and a coupling region (14) at the coronal end (36), which encloses the recess (37) and is concavely or convexly curved,
an abutment (2), wherein the abutment (2) has an apical coupling region (24) which is oriented towards the main body (3) and has a convex or concave geometry opposite to the coupling region (14) of the main body (3),
wherein the coupling region (14) of the main body (3) forms an interface with the coupling region (24) of the abutment (2),
and
a connecting element (51) for fastening the abutment (2) on the main body (3),
**characterized in that**
the curvature of the concave coupling region is smaller than the curvature of the convex coupling region.

2. The dental implant assembly according to claim 1, wherein the main body (3) and/or the abutment (2) is made of titanium, titanium alloys, plastics or ceramic.

3. The dental implant assembly according to claim 1 or 2, wherein the main body (3) and/or the abutment (2) is made of ceramic, preferably of zirconium dioxide or zirconium dioxide alloys, such as yttrium oxide-stabilized zirconium dioxide (Y-TZP) or alumina-toughened zirconium dioxide (ATZ) or cerium oxide-stabilized zirconium dioxide.

4. The dental implant assembly according to claims 1 to 3, wherein the abutment (2) and the main body (3) are made of the same material.

5. The dental implant assembly according to any of the preceding claims, wherein the interface (10) has a convex coupling region (14) of the main body (3) and a concave coupling region (24) of the abutment (2).

6. The dental implant assembly according to any of the preceding claims, wherein the coupling regions (14, 24) of concave and convex shape form a contact line (41), preferably a circular or at least almost circular contact line (41) in the top view.

7. The dental implant assembly according to claim 6, wherein the diameter of the contact line (41) in the top view amounts to 40-99% of the diameter of the coupling portion (35) of the main body (3).

8. The dental implant assembly according to any of the preceding claims, wherein the coupling regions (14, 24) of the abutment (2) and of the main body (3) have at least one elevation (7) and at least one depression (6), preferably an even number of elevations (7) and depressions (6).

9. The dental implant assembly according to claim 8, wherein the coupling region of the main body (3) have a first elevation (7), a second elevation (7) and a first depression (6) between the first elevation (7) and the second elevation (7) as well as a second depression (6) between the second elevation (7) and the first elevation (7), and preferably the elevations (7) and depressions (6) are diametrically opposed to each other.

10. The dental implant assembly according to claim 9, wherein the most apically located point of the first depression (6) of the coupling region (14) of the main body (3) is located more coronally than the most apically located point of the second depression (6) and/or the most coronally located point of the first elevation (7) is located more apically than the most coronally located point of the second elevation (7).

11. The dental implant assembly according to any of the preceding claims, wherein the connecting element (51) is an external connecting element (51) which is incorporated into the recess (37) of the main body (3) through an opening (23) in the abutment (2), which extends from the coronal end (29) to the apical end (27) of the abutment (2).

12. The dental implant assembly according to claim 11, wherein the connecting element (51) is a screw.

13. The dental implant assembly according to claim 11 or 12, wherein the external connecting element (51) is made of a plastic material, preferably of PE, PEK, PEKK, PEEK or CFK-PEEK, particularly preferably of fiber-reinforced PE, PEK, PEKK, PEEK or CFK-PEEK.

14. A dental kit comprising at least one dental implant assembly according to any of the preceding claims and at least one dental prosthesis.

## Revendications

1. Agencement d'implant dentaire (1) comprenant
un corps de base (3) qui est au moins partiellement incorporé dans l'os maxillaire, avec un évidement (37) qui s'étend depuis l'extrémité coronale (36) du corps de base (3) en direction de l'extrémité apicale (32) et une zone de couplage (14) à l'extrémité coronale (36), qui entoure l'évidement (37) et qui présente une courbure concave ou convexe,
un pilier (2), le pilier (2) présentant une zone de couplage apicale (24) qui est orientée vers le corps de base (3) et qui présente une géométrie convexe ou concave opposée à la zone de couplage (14) du corps de base (3),
la zone de couplage (14) du corps de base (3) formant une interface avec la zone de couplage (24) du pilier (2),
et
un élément de liaison (51) pour la fixation du pilier (2) sur le corps de base (3),
**caractérisé en ce que**
la courbure de la zone de couplage concave est plus petite que la courbure de la zone de couplage convexe.

2. Agencement d'implant dentaire selon la revendication 1, dans lequel le corps de base (3) et/ou le pilier (2) sont en titane, en alliages de titane, en matières plastiques ou en céramique.

3. Agencement d'implant dentaire selon la revendication 1 ou 2, dans lequel le corps de base (3) et/ou le pilier (2) est en céramique, de préférence en zircone ou en alliages de zircone, comme par exemple la zircone stabilisée à l'oxyde d'yttrium (Y-TZP) ou la zircone renforcée à l'oxyde d'aluminium (ATZ) ou la zircone stabilisée à l'oxyde de cérium.

4. Agencement d'implant dentaire selon les revendications 1 à 3, dans lequel le pilier (2) et le corps de base (3) sont constitués du même matériau.

5. Agencement d'implant dentaire selon l'une quelconque des revendications précédentes, dans lequel l'interface (10) présente une zone de couplage convexe (14) du corps de base (3) et une zone de couplage concave (24) du pilier (2).

6. Agencement d'implant dentaire selon l'une quelconque des revendications précédentes, dans lequel les zones de couplage (14, 24) de forme concave et convexe forment une ligne de contact (41), de préférence une ligne de contact (41) de forme circulaire ou au moins presque circulaire en vue de dessus.

7. Agencement d'implant dentaire selon la revendication 6, dans lequel le diamètre de la ligne de contact (41) représente, en vue de dessus, 40 à 99 % du diamètre de la section de couplage (35) du corps de base (3).

8. Agencement d'implant dentaire selon l'une quelconque des revendications précédentes, dans lequel les zones de couplage (14, 24) du pilier (2) et du corps de base (3) présentent au moins une élévation (7) et au moins une dépression (6), de préférence un nombre pair d'élévations (7) et de dépressions (6).

9. Agencement d'implant dentaire selon la revendication 8, dans lequel la zone de couplage du corps de base (3) présente une première élévation (7), une deuxième élévation (7) et une première dépression (6) entre la première élévation (7) et la deuxième élévation (7) ainsi qu'une deuxième dépression (6) entre la deuxième élévation (7) et la première élévation (7), et de préférence les élévations (7) et les dépressions (6) sont diamétralement opposées.

10. Agencement d'implant dentaire selon la revendication 9, dans lequel le point le plus apical de la première dépression (6) de la zone de couplage (14) du corps de base (3) est plus coronal que le point le plus apical de la deuxième dépression (6) et/ou le point le plus coronal de la première élévation (7) est plus apical que le point le plus coronal de la deuxième élévation (7).

11. Agencement d'implant dentaire selon l'une quelconque des revendications précédentes, dans lequel l'élément de liaison (51) est un élément de liaison externe (51) qui est incorporé dans l'évidement (37) du corps de base (3) à travers une ouverture (23) dans le pilier (2), qui s'étend de l'extrémité coronale (29) à l'extrémité apicale (27) du pilier (2).

12. Agencement d'implant dentaire selon la revendication 11, dans lequel l'élément de liaison (51) est une vis.

13. Agencement d'implant dentaire selon la revendication 11 ou 12, dans lequel l'élément de liaison externe (51) est en une matière plastique, de préférence en PE, PEK, PEKK, PEEK ou CFK-PEEK, de manière particulièrement préférée en PE, PEK, PEKK, PEEK ou CFK-PEEK renforcés par des fibres.

14. Kit dentaire comprenant au moins un agencement d'implant dentaire selon l'une quelconque des revendications précédentes et au moins une prothèse dentaire.
